**Europäisches Patentamt**

**European Patent Office**

**Office européen des brevets**

(19)

(11) Veröffentlichungsnummer : **0 320 454 B1**

(12)

# EUROPÄISCHE PATENTSCHRIFT

(45) Veröffentlichungstag der Patentschrift :
**01.04.92 Patentblatt 92/14**

(51) Int. Cl.$^5$ : **G03B 27/62**

(21) Anmeldenummer : **88810829.7**

(22) Anmeldetag : **02.12.88**

(54) Fotografisches Kopier- und Vergrösserungsgerät.

(30) Priorität : **11.12.87 CH 4848/87**

(43) Veröffentlichungstag der Anmeldung :
**14.06.89 Patentblatt 89/24**

(45) Bekanntmachung des Hinweises auf die
Patenterteilung :
**01.04.92 Patentblatt 92/14**

(84) Benannte Vertragsstaaten :
**CH DE FR GB IT LI**

(56) Entgegenhaltungen :
**EP-A- 0 009 878**
**DE-A- 1 522 195**
**DE-A- 1 916 989**
**US-A- 3 369 449**

(73) Patentinhaber : **GRETAG Aktiengesellschaft**
**Althardstrasse 70**
**CH-8105 Regensdorf (CH)**

(72) Erfinder : **Knecht, Hugo**
**Surbgasse 303**
**CH-8165 Schöfflisdorf (CH)**
Erfinder : **Lüscher, René**
**Balsbergweg 13**
**CH-8302 Kloten (CH)**

(74) Vertreter : **Kleewein, Walter, Dr. et al**
**Patentabteilung CIBA-GEIGY AG Postfach**
**CH-4002 Basel (CH)**

EP 0 320 454 B1

**Beschreibung**

Die Erfindung betrifft ein fotografisches Kopier- und Vergrösserungsgerät gemäss Oberbegriff des Patentanspruches 1.

Der Trend Klein- oder Kleinstlabors dezentral in Supermärkten, Drogerien oder anderen Läden aufzustellen, bedingt eine möglichst kompakte Bauform der zu einer Einheit zusammengefügten Verarbeitungsgeräte (Kopiergerät, Papierprozessor und -trockner bzw. auch Filmprozessor und -trockner). In ihrer Ausführung ist auch darauf zu achten, dass die Verarbeitungsgeräte durch Normtüren von 80 cm Breite hindurchgehen müssen.

Die Arbeitstischhöhe bei Kopiergeräten beträgt überlicherweise etwa 80 cm bis 110 cm. Diese Arbeitshöhe im Zusammenhang mit der kompakten Ausführung führt dazu, dass die meist relativ langen Filmstreifen (z.B. bei 135-Film bis zu 1,7 m) links oder rechts des Arbeitstisches Bodenberührung erhalten, wodurch die Filme verschmutzt oder durch Kratzer beschädigt werden.

Es ist Aufgabe der Erfindung ein fotografisches Kopier- und Vergrösserungsgerät derart zu verbessern, dass vorstehend genannte Probleme gelöst werden, ohne Einschränkungen an Funktionalität und leichter Handhabbarkeit in Kauf nehmen zu müssen. Insbesondere soll durch die Erfindung verhindert werden, dass vom Arbeitstisch seitlich herabhängende Filmlängen Bodenberührung erhalten, wodurch sie verschmutzt und durch Kratzer beschädigt werden.

Die erfindungsgemässe Vorrichtung, die diesen Anforderungen gerecht wird, ist im Patentanspruch 1 beschrieben. Bevorzugte Ausführungsformen ergeben sich aus den abhängigen Ansprüchen.

Im folgenden wird die Erfindung anhand eines in der Zeichnung dargestellten Ausführungsbeispiels näher erläutert. Es zeigen:

Fig. 1 eine schematische Gesamtdarstellung des Gerätes im Vertikalschnitt längs der Transportbahn des Filmes F,

Fig. 2 bis Fig. 4 drei verschiedene Varianten der in Fig. 1 mit 10 bezeichneten vorderen Klemmvorrichtung in perspektivischer Darstellung und grösserem Massstab,

Fig. 5 bis Fig. 7 ein Detail aus Fig. 1 in grösserem Massstab in verschiedenen Funktionsphasen der in Fig. 1 mit 30 bezeichneten hinteren Klemmvorrichtung,

Fig. 8 einen Schnitt längs der Linie VIII - VIII in Fig. 5,

Fig. 9 eine Detailaufsicht in Richtung des Pfeiles IX der Fig. 5 in grösserem Massstab und

Fig. 10 eine weitere Ausführungsvariante der in Fig. 1 mit 30 bezeichneten hinteren Klemmvorrichtung in grösserem Massstab.

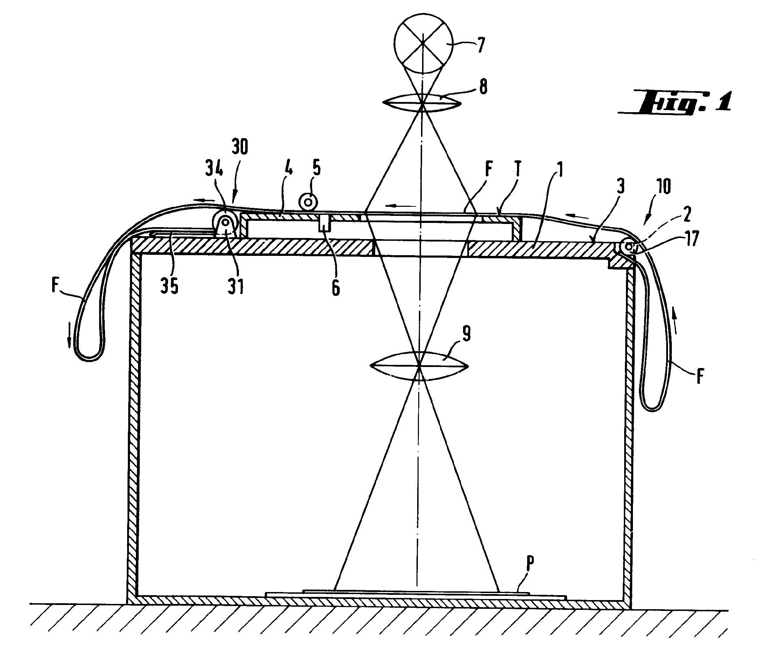

In Fig. 1 sind von dem fotografischen Kopier- und Vergrösserungsgerät nur die wesentlichsten, für das Verständnis der Erfindung relevanten Teile dargestellt. Es umfasst im wesentlichen einen Arbeitstisch 1 und eine darauf angeordnete (oder in ihn eingelassene) Filmbühne 4. Ferner sind noch schematisch eine Kopierlichtquelle 7, eine Beleuchtungsoptik 8, ein Abbildungsobjektiv 9 sowie das lichtempfindliche Kopiermaterial P angedeutet. Eine Filmtransportwalze 5 symbolisiert die üblichen Transportmittel (Walzen, Greifer) für zu kopierenden fotografischen Film F, wobei die Transportrichtung durch Pfeile angedeutet ist. Soweit entspricht das schematisch dargestellte Gerät dem Stand der Technik, so dass sich eine nähere Erläuterung erübrigt.

Gemäss einer Ausfürunhgs form der Erfindung ist das fotografische Kopier- und Vergrösserungsgerät zusätzlich mit zwei Klemmvorrichtungen 10 und 30 für den Film F ausgerüstet, wobei in Filmtransportrichtung gesehen die erste 10 vor und die zweite 30 nach der Filmbühne 4 in der Transportbahn des Filmes F angeordnet ist. Entsprechend ihrer Lage werden diese Klemmvorrichtungen 10 und 30 im folgenden als vordere Klemmvorrichtung 10 bzw. als hintere Klemmvorrichtung 30 bezeichnet. Diese Klemmvorrichtungen 10 und 30, deren Aufbau und Funktionsweise weiter unten noch näher beschrieben ist, halten die beiden Enden des zu kopierenden Filmes F fest, so dass sich auf der Filmeingabe- bzw. der Filmentnahmeseite die vom Arbeitstisch 1 seitlich herabhängende Filmlänge um mindestens die Hälfte verkürzt und auf diese Weise keine Bodenberührung mehr ergibt.

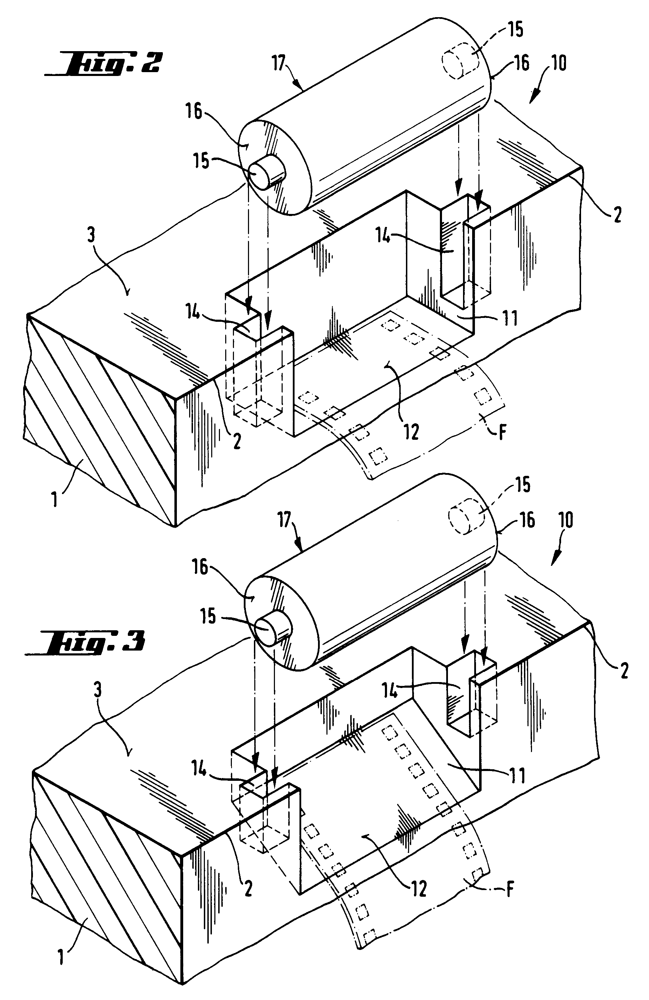

In der in Fig. 2 perspektivisch dargestellten Variante einer in die filmeingabeseitige Arbeitstischkante 2 integrierten vorderen Klemmvorrichtung 10 ist diese als Rollenklemme ausgeführt, deren eine Klemmbacke durch eine Rolle 17 und die andere durch eine ortsfeste Gegenfläche 12 gebildet ist. Sie umfasst eine Ausnehmung 11 in der Arbeitstischkante 2 mit Lagerschlitzen 14 in den zur Filmtransportrichtung parallelen Seitenwandungen der Ausnehmung 11, in denen eine Rolle 17 mit aus ihren Stirnflächen 16 ragenden Achsstümpfen 15 drehbar und höhenverschiebbar gelagert ist. Aus Gründen einer besseren Anschaulichkeit ist die Rolle 17 in Fig. 2 bis Fig. 4 nicht in die Lagerschlitze 14 eingesetzt gezeichnet. Zwischen dieser Rolle 17 und der Gegenfläche 12 ist ein Endstück des Filmes F durch das Gewicht der Rolle einklemmbar. Das Gewicht der Rolle 17 ist so gewählt, dass die daraus resultierende Klemmkraft ausreicht ein eingeklemmtes Filmende gegen die Wirkung der Schwerkraft zu halten und andererseits die Kraft der Filmtransportmittel ausreicht, das eingeklemmte Filmende aus der vorderen Klemmvorrichtung 10 herauszuziehen, ohne den Film F dabei zu beschädigen.

Zur Schonung der Längskanten des Filmes F werden Rolle 17 und Ausnehmung 11 breiter als handelsübliche Filmformate ausgeführt.

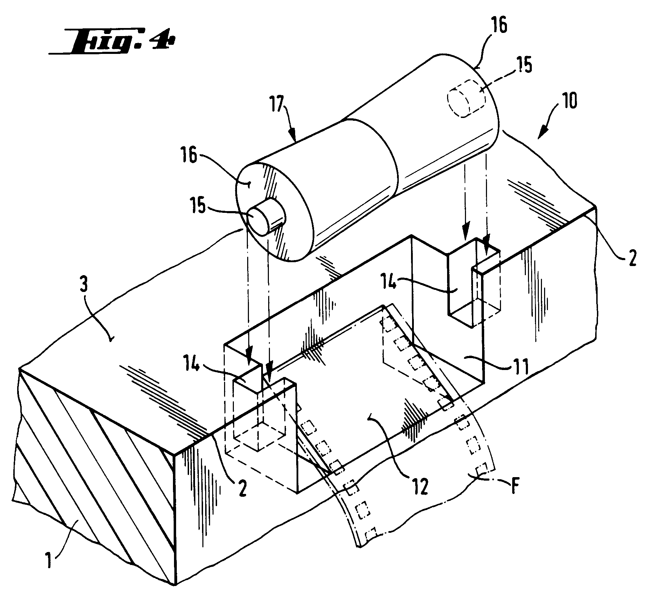

In den in Fig. 3 und 4 perspektivisch dargestellten Detailvarianten ist die Gegenfläche 12 filmeingabeseitig nach aussen und unten abgeschrägt. In Fig. 3 erstreckt sich die Gegenfläche 12 über die gesamte Breite der Ausnehmung 11, während sie in der Ausführungsvariante in Fig. 4 nur den mittleren Teil der Ausnehmung 11 einnimmt; in letzterem Fall sollte die Breite der Gegenfläche 12 geringfügig schmäler als das kleinste handelsübliche Filmformat gewählt werden. Durch die Abschrägung bildet die Gegenfläche 12 zur Vertikalen einen stumpfen Winkel, wodurch die darüber herabhängende Filmlänge durch die geringere Abbiegung zusätzlich geschont wird; ausserdem können auch Rollen 17 grösseren Gewichts eingesetzt werden, da die Anpresskraft nur durch den auf die Gegenfläche 12 vertikalen Anteil der Gewichtskraft bewirkt wird. Die auf den Film F wirkende Klemmkraft ist im wesentlichen durch das Produkt dieser Anpresskraft und dem Reibungskoeffizienten des Filmes F auf der Gegenfläche 12 gegeben.

Bevorzugt wird die Rolle 17 aus Leichtmetall und voll ausgeführt.

Die Tiefe der Ausnehmung 11 und der Lagerschlitze 14 ist so gewählt, dass die Rolle 17 mit einem Teil ihres Umfangs über die Arbeitstischoberfläche 3 ragt. Dadurch wird vermieden, dass der vom Filmtransport gezogene Film F auf der Arbeitstischoberfläche 3 schleift.

Um den Kontaktbereich zwischen Rolle 17 und Film F möglichst klein zu halten, ist die Rolle 17 bevorzugt nach innen doppelkonisch zulaufend ausgeführt. Dadurch beschränkt sich der Auflagebereich der Rolle 17 auf den Film F auf 2 Punkte an den Längsrändern des Filmes F.

Zur Schonung der Filmoberfläche ist die Rolle 17 oberflächenpoliert.

Besonders vorteilhaft ist es, Ausnehmung 11 mit Lagerschlitzen 14 und Gegenfläche 12 in die Arbeitstischkante 2 einzuformen. Am besten erfolgt dies bereits beim Formen des Arbeitstisches 1 aus Kunststoff (z.B. PU-Schaum).

In einer unter anderem als Nachrüstsatz für bereits bestehende Geräte gedachten Ausführungsvariante sind die Gegenfläche 12 und die Lagerschlitze 14 für die Achsstümpfe 15 der Rolle 17 vorteilhafterweise in einem einzigen Block ausgespart, welcher auf dem Arbeitstisch 1 in der Transportbahn des Filmes F, bevorzugt an der Arbeitstischkante 2 befestigt wird.

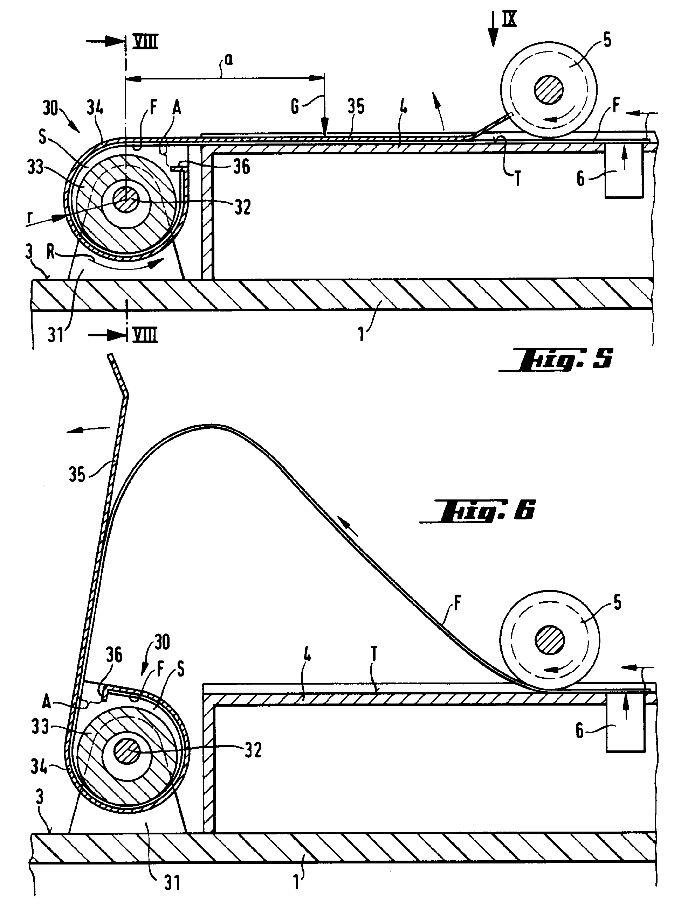

Eine in Fig. 5 bis Fig. 8 im Schnitt dargestellte Ausführungsvariante einer hinteren Klemmvorrichtung 30 umfasst ein im wesentlichen zylindrisches Gehäuse 34, welches schwenkbar um eine mittels Lagerböcken 31 fest mit dem Arbeitstisch 1 verbundene Achse 32 gelagert ist. Die Schwenkachse 32 verläuft unterhalb der Filmtransportebene T, parallel zu dieser und senkrecht zur Filmtransportrichtung. Das Gehäuse 34 ist mit einem achsparallelen Filmeintrittsschlitz A für den Film F versehen und geht in eine etwa tangential vom oberen Rand des Filmeintrittsschlitzes A abstehende Zunge 35 über. In der Ruhestellung (Fig. 5) des Gehäuses 34 reicht die Zunge 35 mit ihrem nach oben gebogenen Ende bis knapp an die Filmtransportwalze 5 und bildet zwischen der Filmtransportwalze 5 und dem in der Filmtransportbahn befindlichen Filmeintrittsschlitz A eine obere Filmführung. Filmeintrittsseitig ist unterhalb des Filmeintrittsschlitzrandes im Gehäuse 34 ein nach innen ragender Anschlag 36 für das Filmvorderende ausgebildet. In bevorzugter Ausführung ist das Gehäuse 34 am unteren Filmeintrittsschlitzrand nach innen abgewinkelt und bildet so den Anschlag 36. Im Gehäuse 34 befindet sich eine frei liegende Walze 33, deren Durchmesser etwas kleiner als der Gehäusedurchmesser ist, so dass zwischen Walze 33 und Gehäuseinnenwand ein genügend breiter Spalt S vorhanden ist, um ein problemloses Eindringen des Filmvorderendes zwischen Walze 33 und Gehäuseinnenwand bis zum Anschlag 36 nach dem Kontaktbereich von Gehäuse 34 und Walze 33 zu ermöglichen.

Infolge der Zunge 35 liegt der Schwerpunkt von Gehäuse 34 mit Walze 33 und Zunge 35 in der Ruhestellung (Fig. 5) vor der Schwenkachse 32. Um zu verhindern, dass die hintere Klemmvorrichtung 30 bereits beim Eindringen des Filmvorderendes zwischen Gehäuseinnenwand und Walze 33 durch die dabei auftretende Reibungskraft zum Verschwenken um die Achse 32 veranlasst wird, muss sie dagegen einen ausreichend grossen Widerstand aufbieten. Dies kann z.B. durch geeignete Bremsvorrichtungen erfolgen. Am vorteilhaftesten geschieht dies aber durch geeignete Dimensionierung der Zunge 35. (Das Produkt aus Gewicht G der Zunge 35 und Abstand a des Schwerpunktes von der Achse 32 muss geringfügig grösser sein als das Produkt aus der Reibungskraft R, welche der Filme F beim Eindringen zwischen Gehäuse 34 und Walze 33 bis zum Anschlag 36 erfährt, und dem Radius r des Gehäuses 34).

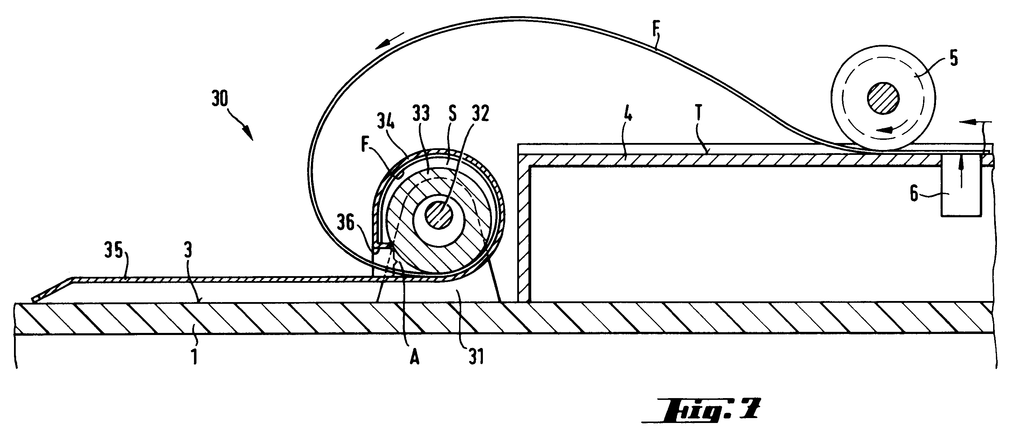

Ab dem Zeitpunkt, in welchem ein in das Gehäuse 34 eintretender Film F mit seiner Vorderkante den Anschlag 36 erreicht, wird beim Weitertransportieren des Films F das Gehäuse 34 aus seiner Ruhelage nach oben verschwenkt. Diese Phase zeigt Fig. 6. Wenn das Gehäuse soweit verschwenkt ist, dass die Filmführungszunge 35 die Stellung "12 Uhr" erreicht, kippt das Gehäuse 34 in die in Fig. 7 gezeigte Stellung. Das Filmvorderende ist zwischen Gehäuse 34 und Walze 33 eingeklemmt und wird durch das Gewicht der Walze 33 gehalten. Beim Weitertranport des Filmes F bildet sich wiederum (wie eingangsseitig) eine Schlaufe, welche auf der Filmentnahmeseite vom Arbeitstisch 1 seitlich herabhängt, jedoch aufgrund der Verkürzung der herabhängenden Filmlänge um mindestens die Hälfte keine Bodenberührung erhält.

In Fig. 7 ist das Gehäuse 34 um 180° gegenüber der Ruhelage (Fig. 5) geschwenkt, jedoch würde auch ein Schwenken um mindestens mehr als 90° ausreichen um zu gewährleisten, dass die sich bildende Schlaufe nicht in Richtung Filmbühne 4 fällt.

Zur Schonung der Filmoberfläche weisen Unterseite der Zunge 35, Innenwand des Gehäuses 34 und Walze 33 glatte Oberflächen auf.

Der in Fig. 8 dargestellte Schnitt längs der Linie VIII-VIII in Fig. 5 gilt sinngemäss auch für die entsprechende gedachte Schnittlinie in Fig. 6 und Fig. 7.

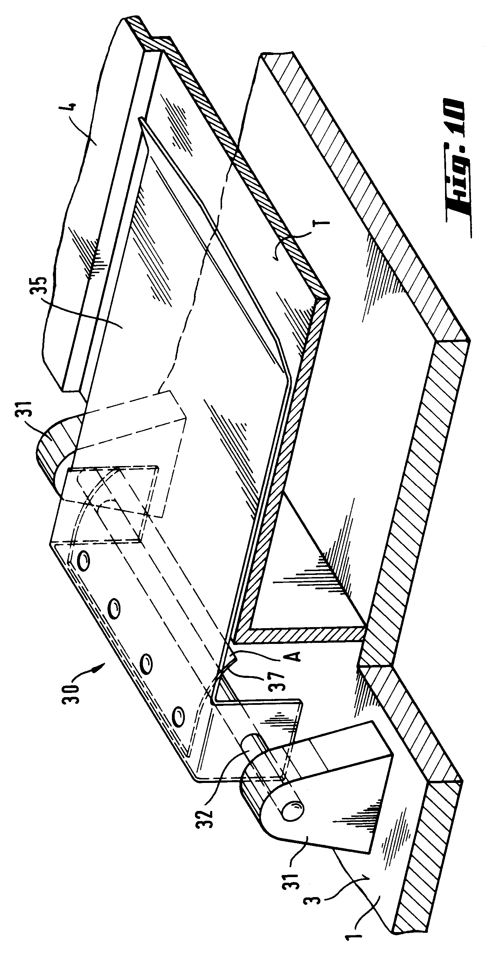

In Fig. 10 ist eine weitere Ausführungsvariante der hinteren Klemmvorrichtung 30 in perspektivischer Darstellung wiedergegeben. Die Funktion dieser Ausführungsvariante ist bezüglich Verschwenken analog zu der an Hand der Fig. 5 bis Fig. 7 beschriebenen, nur wird in diesem Fall das Filmvorderende zwischen der Zunge 35 und einer auf der Unterseite des achsseitigen Zungenendes befestigten Blattfeder 37 eingeklemmt.

Zur Schonung der Filmoberfläche weisen Zungenunterseite und Blattfeder 37 glatte Oberflächen auf.

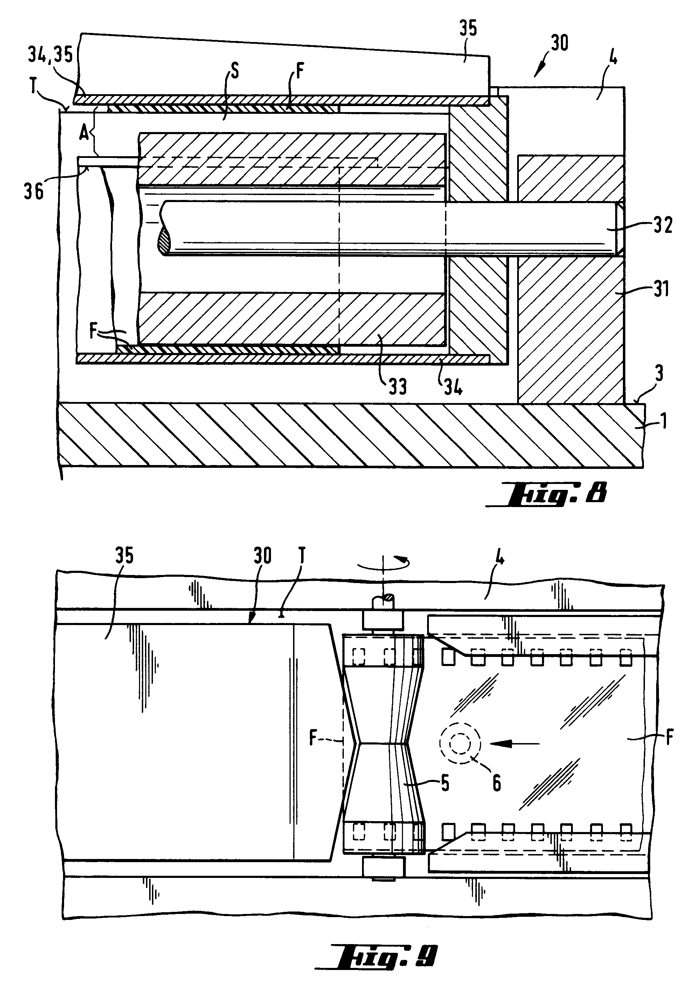

Häufig kommt es vor, dass die von der auf der Filmbühne 4 befindlichen Filmtransportwalze 5 vorgeschobene Filmvorderkante nicht plan auf der Filmtransportebene T aufliegt. Um dennoch ein sicheres Einfädeln des Filmvorderendes in die hintere Klemmvorrichtung 30 zu gewährleisten, ist es vorteilhaft, die Filmtransportwalze 5 nach innen doppelkonisch zulaufend auszuführen und die Zunge 35 an ihrem transportwalzenseitigen Ende der Filmtransportwalzenform anzupassen, wie in Fig. 9 dargestellt. Dadurch kann die Zunge 35 in der Ruhestellung bis unmittelbar vor die Filmtransportwalze 5 reichen. Auf diese Weise wird ein mit den Filmlängskanten noch unter der Transportwalze 5 befindliches Filmvorderende bereits von der Zunge 35 überdeckt und kann somit beim Weitertransport nicht mehr aus der Filmführung gleiten.

In Fig. 5 ist unmittelbar vor der Filmtransportwalze 5 ein Detektor 6 dargestellt. Der Detektor 6 kann mechanischer Natur sein, üblicherweise werden Fotozellen dafür verwendet. Passiert das hintere Filmende den Detektor, so gibt dieser ein Signal an eine Steuerung bekannter Art weiter, wodurch der Filmtransport angehalten wird, bevor der Film F mit seinem hinteren Ende den Wirkungsbereich der Filmtransportwalze 5 verlässt.

Im folgenden wird Handhabung und Funktionsweise des beschriebenen Gerätes zusammenfassend erläutert.

Bei Kleinlabors kommen entwickelte Filme F üblicherweise von einer Aufhängevorrichtung geeigneter Höhe hängend zum fotografischen Kopier- und Vergrösserungsgerät. Der Operator nimmt das zu Boden hängende Filmendstück und klemmt dieses mit der Emulsionsseite auf der Gegenfläche 12 aufliegend in die vordere Klemmvorrichtung 10 ein. Daraufhin löst er das entgegengesetzte Filmende von der Aufhängevorrichtung und fädelt dieses in die auf der Filmbühne 4 befindlichen Filmtransportmittel mit der Filmtransportwalze 5 ein. Der Filmtransport bewegt den über die Rolle 17 gleitenden Film weiter. Der Film F bildet eine Schlaufe, welche auf der Filmeingabeseite vom Arbeitstisch 1 seitlich herabhängt, jedoch aufgrund der Verkürzung der herabhängenden Filmlänge um mindestens die Hälfte nun nicht mehr in Bodenberührung kommt.

Das von der Filmtransportwalze 5 vorgeschobene vordere Ende des Filmes F trifft auf die hintere Klemmvorrichtung 30, in welche es eingeklemmt wird. Beim Weitertransport des Filmes F wird die hintere Klemmvorrichtung 30 verschwenkt, und die sich bildende Schlaufe hängt auf der Filmentnahmeseite vom Arbeitstisch 1 seitlich herab, kommt jedoch aufgrund der Verkürzung der herabhängenden Filmlänge um mindestens die Hälfte nicht in Bodenberührung.

Der in Filmtransportrichtung gesehen vor der Filmtransportwalze 5 angebrachte Detektor 6 gibt beim Passieren des hinteren Filmendes, welches von den Filmtransportmitteln aus der vorderen Klemmvorrichtung 10 gezogen wurde, ein Signal an eine Steuerung bekannter Art weiter, wodurch der Filmtransport angehalten wird bevor der Film mit seinem hinteren Ende den Wirkungsbereich der Filmtransportwalze 5 verlässt. Dies hat den Vorteil, dass ein Operator nicht ständig kontrollieren muss, wie weit ein Film F durch das fotografische Kopier- und Vergrösserungsgerät durchgelaufen ist. Der Operator kann nun den von der Filmtransportwalze 5 und der hinteren Klemmvorrichtung 30 gehaltenen und in einer Schlaufe vom Arbeitstisch 1 seitlich herabhängenden Film F, welcher aufgrund der Verkürzung der herabhängenden Filmlänge um mindestens die Hälfte keine Bodenberührung erhält, durch eine geringe Zugkraft leicht vom Gerät lösen und einer weiteren Behandlung zuführen.

**Patentansprüche**

1. Fotografisches Kopier- und Vergrösserungsgerät mit einem Arbeitstisch (1) und einer darauf angeordneten Filmbühne (4) sowie Transportmittel für einen Film (F), welche eine auf der Filmbühne (4) angeordnete Filmtransportwalze (5) umfassen, dadurch gekennzeichnet, dass bezüglich der Filmtransportrichtung vor der Filmbühne (4) in der Transportbahn des Films (F) am Arbeitstisch (1) eine erste, verdere Klemmvorrichtung (10), in welche der Film mit einem Ende einklemmbar ist, derart angeordnet ist dass der Film beim Einfädeln seines anderen Endes in die Transportmittel eine Schlaufe bildet, wodurch sich auf der Filmeingabeseite der Filmbühne die seitlich vom Arbeitstisch (1) herabhängende Filmlänge um mindestens die Hälfte verkürzt.

2. Vorrichtung nach Anspruch 1, dadurch gekennzeichnet, dass bezüglich der Filmtransportrichtung nach der Filmbühne (4) eine zweite, hintere Klemmvorrichtung (30) in der Transportbahn des Films (F) so angeordnet ist, dass sie den von der Filmtransportwalze (5) vorgeschobenen Film an seinem vorderen Ende erfasst und festhält, so dass der Film (F) beim Weitertransport eine Schlaufe bildet, wodurch sich auf der Filmentnahmeseite die vom Arbeitstisch (1) seitlich herabhängende Filmlänge um mindestens die Hälfte verkürzt.

3. Vorrichtung nach Anspruch 2, dadurch gekennzeichnet, dass bezüglich der Filmtransportrichtung vor der Filmtransportwalze (5) in der Transportebene (T) des Films (F) ein Detektor (6) angebracht ist, welcher beim Passieren des hinteren Filmendes den Filmtransport anhält bevor der Film (F) mit seinem hinteren Filmende den Wirkungsbereich der Filmtransportwalze (5) verlässt.

4. Vorrichtung nach einem der Ansprüche 1 bis 3, dadurch gekennzeichnet, dass die Klemmkraft der vorderen Klemmvorrichtung (10) so dimensioniert ist, dass die Kraft der Filmtransportmittel zum Herausziehen des eingeklemmten Filmendes aus der vorderen Klemmvorrichtung (10) ausreicht.

5. Vorrichtung nach Anspruch 4, dadurch gekennzeichnet, dass die vordere Klemmvorrichtung (10) als Rollenklemme ausgebildet ist.

6. Vorrichtung nach Anspruch 5, dadurch gekennzeichnet, dass eine der beiden Klemmbacken der Rollenklemme durch eine drehbar und höhenverschiebbar gelagerte Rolle (17) und die andere Klemmbache durch eine ortsfeste Gegenfläche (12) gebildet ist.

7. Vorrichtung nach Anspruch 6, dadurch gekennzeichnet, dass die Klemmkraft durch das Gewicht der Rolle (17) hervorgerufen wird.

8. Vorrichtung nach Anspruch 7, dadurch gekennzeichnet, dass die Rolle (17) breiter als handelsübliche Filmformate ausgeführt ist.

9. Vorrichtung nach Anspruch 8, dadurch gekennzeichnet, dass die Rolle (17) mit aus ihren Stirnflächen (16) ragenden Achsstümpfen (15) in Lagerschlitzen (14) gelagert ist.

10. Vorrichtung nach Anspruch 9, dadurch gekennzeichnet, dass die Gegenfläche (12) filmeingabeseitig nach aussen abfällt und zur Vertikalen einen stumpfen Winkel bildet .

11. Vorrichtung nach Anspruch 9 oder 10, dadurch gekennzeichnet, dass die Gegenfläche (12) und die Lagerschlitze (14) für die Achsstümpfe (15) der Rolle (17) in einem einzigen Block ausgespart sind.

12. Vorrichtung nach einem der Ansprüche 9 bis 11, dadurch gekennzeichnet, dass die Gegenfläche (12) an der Arbeitstischkante (2) angeordnet ist .

13. Vorrichtung nach Anspruch 12, dadurch gekennzeichnet, dass die Lagerschlitze (14) und die Gegenfläche (12) in der Arbeitstischkante (2) ausgespart sind.

14. Vorrichtung nach Anspruch 13, dadurch gekennzeichnet, dass die Rolle (17) derart in den Lagerschlitzen (14) gelagert ist, dass sie mit einem Teil ihres Umfangs über die Arbeitstischoberfläche (3) ragt.

15. Vorrichtung nach Anspruch 2, dadurch gekennzeichnet, dass die hintere Klemmvorrichtung (30) am Arbeitstisch (1) schwenkbar gelagert ist und einen ausreichend grossen Schwenkwiderstand aufbietet, um ein Einklemmen des Filmes (F) gegen die dabei auftretende Reibungskraft zu ermöglichen.

16. Vorrichtung nach Anspruch 15, dadurch gekennzeichnet, dass die Schwenkachse (32) unterhalb der Filmtransportebene (T), parallel zu dieser und vertikal zur Filmtransportrichtung verläuft.

17. Vorrichtung nach Anspruch 15 oder 16, dadurch gekennzeichnet, dass der Schwerpunkt der hinteren Klemmvorrichtung (30), in Filmtransportrichtung gesehen, vor der Schwenkachse (32) liegt.

18. Vorrichtung nach einem der Ansprüche 15 bis 17, dadurch gekennzeichnet, dass die hintere Klemmvorrichtung (30) mit einer in der Ruhelage zur Filmtransportwalze (5) ragenden Zunge (35), welche eine obere Filmführung bildet, ausgestattet ist.

19. Vorrichtung nach einem der Ansprüche 15 bis 18, dadurch gekennzeichnet, dass die hintere Klemmvorrichtung (30) ein im wesentlichen zylindrisches Gehäuse (34) mit einem achsparallelen Filmeintrittsschlitz (A) in der Filmtransportbahn und eine im Gehäuse (34) befindliche frei liegende Walze (33), deren Durchmesser etwas kleiner als der Gehäusedurchmesser ist, so, dass zwischen Walze (33) und Gehäuseinnenwand ein Eindringspalt (S) vorhanden ist, umfasst.

20. Vorrichtung nach Anspruch 18 und 19, dadurch gekennzeichnet, dass die Zunge (35) etwa tangential vom oberen Rand des Filmeintrittsschlitzes (A) absteht, und filmeintrittsseitig nach dem Kontaktbereich von Gehäuse (34) und Walze (33) ein in das Gehäusinnere ragender Anschlag (36) für das Filmvorderende vorgesehen ist.

21. Vorrichtung nach Anspruch 18, dadurch gekennzeichnet, dass auf der Unterseite des schwenkachsenseitigen Endes der Zunge (35) eine Blattfeder (37) befestigt ist, welche zusammen mit der Zunge (35) einen Klemmspalt für den Film (F) bilden.

22. Vorrichtung nach einem der Ansprüche 18 bis 21, dadurch gekennzeichnet, dass die Filmtransportwalze (5) nach innen doppelkonisch zulaufend ausgeführt ist und das transportwalzenseitige Ende der Zunge (35) der Filmtransportwalzenform angepasst ist.

## Claims

1. A photographic copying and enlarging apparatus having a work table (1) and a film stage (4) arranged thereon, as well as transport means for a film (F) comprising a film transport roller (5) arranged on the film stage (4), wherein a first, front clamping device (10) in which one end of the film can be clamped is so arranged on the work table (1) in the transport path of the film (F), before the film stage (4) in the direction of transport of the film, that when its other end is threaded into the transport means the film forms a loop, whereby the length of film hanging down at the side of the work table (1) at the film inlet side of the film stage (4) is shortened by at least one half.

2. An apparatus according to claim 1, wherein a second, rear clamping device (30) is so arranged in the transport path of the film (F), after the film stage (4) in the direction of transport of the film, that it grips and holds the front end of the film moved forward by the film transport roller (5), causing the film (F) to form a loop during its further transport, whereby the length of film hanging down at the side of the work table (1) at the film outlet side is shortened by at least one half.

3. An apparatus according to claim 2, wherein there is mounted in the transport plane (T) of the film (F) before the film transport roller (5) in the direction of transport of the film, a detector (6) which, when the rear end of the film passes, arrests the film transport before the rear end of the film (F) leaves the region of action of the film transport roller (5).

4. An apparatus according to any one of claims 1 to 3, wherein the clamping force of the front clamping device (10) is such that the force of the film transport means is sufficient to draw the clamped film end from the front clamping device (10).

5. An apparatus according to claim 4, wherein the front clamping device (10) is in the form of a roller clamp.

6. An apparatus according to claim 5, wherein one of the two clamping jaws of the roller clamp is formed by a rotatably mounted and vertically adjustable roller (17) and the other clamping jaw is formed by a fixed counter surface (12).

7. An apparatus according to claim 6, wherein the clamping force is generated by the weight of the roller (17).

8. An apparatus according to claim 7, wherein the roller (17) is wider than commercial film formats.

9. An apparatus according to claim 8, wherein the roller (17) is mounted in bearing slots (14) by journals (15) projecting from its end faces (16).

10. An apparatus according to claim 9, wherein the counter surface (12) slopes down towards the outside at the film inlet side and forms an obtuse angle with the vertical.

11. An apparatus according to either claim 9 or claim 10, wherein the counter surface (12) and the bearing slots (14) for the journals (15) of the roller (17) are recessed in a single block.

12. An apparatus according to any one of claims 9 to 11, wherein the counter surface (12) is located at the work table edge (2).

13. An apparatus according to claim 12, wherein the bearing slots (14) and the counter surface (12) are recessed in the work table edge (2).

14. An apparatus according to claim 13, wherein the roller (17) is so counted in the bearing slots (14) that a portion of its circumference projects above the work table surface (3).

15. An apparatus according to claim 2, wherein the rear clamping device (30) is pivotally mounted on the work table (1) and has a pivoting resistance great enough to enable the film (F) to be clamped against the friction force generated.

16. An apparatus according to claim 15, wherein the pivot shaft (32) extends below the film transport plane (T), parallel to said plane and perpendicular to the direction of transport of the film.

17. An apparatus according to either claim 15 or claim 16, wherein the centre of gravity of the rear clamping device (30), as viewed in the direction of transport of the film, is located in front of the pivot shaft (32).

18. An apparatus according to any one of claims 15 to 17, wherein the rear clamping device (30) is equipped with a tongue (35) which, in the rest position, extends to the film transport roller (5) and forms an upper film guide.

19. An apparatus according to any one of claims 15 to 18, wherein the rear clamping device (30) comprises an essentially cylindrical holding (34) with an axially parallel film inlet slot (A) in the film transport path and a roller (33) lying free in the housing (34), the roller having a diameter slightly smaller than the diameter of the housing, so that a penetration gap (S) is present between the roller (33) and the inner wall of the housing.

20. An apparatus according to claims 18 and 19, wherein the tongue (35) projects approximately tangentially from the upper edge of the film inlet slot (A), and a stop (36) projecting into the interior of the housing is provided for the front end of the film at the film inlet side, after the contact area of the housing (34) and the roller (33).

21. An apparatus according to claim 18, wherein there is mounted on the underside of the pivot shaft end of the tongue (35) a flat spring (37) which, together with the tongue (35), forms a clamping gap for the film (F).

22. An apparatus according to any one of claims 18 to 21, wherein the film transport roller (5) takes the form of two cones that taper inwardly, and the end of the tongue (35) at the transport roller side is matched to the shape of the film transport roller.

**Revendications**

1. Appareil tireuse-agrandisseur pour film photographique comportant une table de travail (1) et une platine pour film (4) disposée sur la table, ainsi que des moyens de transport pour un film (F) qui comprennent un rouleau (5) de transport du film disposé sur la platine (4), appareil caractérisé par le fait que, en se rapportant à la direction de transport du film, avant la platine (4) est disposé, sur le chemin de transport du film (F), sur la table de travail (1), un premier dispositif de bridage avant (10) dans-lequel le film peut, par une extrémité, se brider de façon telle que ce film, lors de l'enfilage de son autre extrémité dans les moyens de transport, forme une boucle, de sorte que, du côté introduction du film de la platine (4), la longueur du film qui pend de la table de travail (1) sur le côté est raccourcie d'au moins la moitié.

2. Dispositif selon la revendication 1, caractérisé par le fait qu'en se rapportant à la direction de transport du film, après la platine (4), un second dispositif de bridage arrière (30) est disposé sur le chemin de transport du film (F) de façon à saisir et maintenir par son extrémité avant le film tiré par le rouleau (5) de transport du film, de sorte que, lors de la poursuite de son transport, le film (F) forme une boucle, et que , du côté reprise du film, la longueur du film qui pend de la table de travail (1) sur le côté est raccourcie d'au moins la moitié.

3. Dispositif selon la revendication 2, caractérisé par le fait qu'en se rapportant à la direction de transport de film, avant le rouleau (5) de transport du film, dans le plan de transport (T) du film (F) est disposé un détecteur (6) qui, lorsque passe devant lui l'extrémité arrière du film, arrête le transport du film avant que le film (F), par son extrémité arrière, ne quitte la zone d'action du rouleau (5) de transport du film.

4. Dispositif selon l'une des revendications 1 à 3, caractérisé par le fait que la force de bridage du dispositif de bridage avant (10) est calculée de façon que la force des moyens de transport du film suffise pour extraire l'extrémité du film, bridée, hors du dispositif de bridage avant (10).

5. Dispositif selon la revendication 4, caractérisé par le fait que le dispositif de bridage avant (10) est conçu sous forme de dispositif de bridage à rouleau.

6. Dispositif selon la revendication 5, caractérisé par le fait que l'un des deux mors du dispositif de bridage à rouleau est formé par un rouleau (17) porté avec possibilité de tourner et de coulisser en hauteur, et que l'autre mors de bridage est formé par une contre-surface fixe (12).

7. Dispositif selon la revendication 6, caractrisé par le fait que la force de bridage est engendrée par le poids du rouleau (17).

8. Dispositif selon la revendication 7, caractérisé par le fait que le rouleau (17) est prévu plus large que les formats de film habituels du commerce.

9. Dispositif selon la revendication 8, caractérisé par le fait que le rouleau (17) porte, dans des rainures formant portée (14), par des embouts axiaux (15) qui font saillie de ses surfaces frontales (16).

10. Dispositif selon la revendication 9, caractérisé par le fait que la contre-surface (12) est en pente descendante vers l'extérieur du côté introduction du film et forme un angle obtus par rapport à la verticale.

11. Dispositif selon la revendication 9 ou 10, caractérisé par le fait que la contre-surface (12) et la fente formant portée (14) pour les embouts axiaux (15) du rouleau (17) sont obtenues par évidement d'un bloc unique.

12. Dispositif selon l'une des revendications 9 à 11, caractérisé par le fait que la contre-surface (12) est disposée sur le bord (2) de la table de travail.

13. Dispositif selon la revendication 12, caractérisé par le fait que la fente formant portée (14) et la contre-surface (12) sont obtenues par évidement dans la bordure (2) de la table de travail.

14. Dispositif selon la revendication 13, caractérisé par le fait que le rouleau (17) porte dans les rainures formant portée (14) de façon à venir, par une partie de sa périphérie, au-dessus de la surface (3) de la table de travail.

15. Dispositif selon la revendication 2, caractérisé par le fait que le dispositif de bridage arrière (30) porte sur la table de-travail (1) avec possibilité de pivotement et offre une résistance de pivotement suffisamment importante pour permettre le bridage du film (F) malgré l'opposition de la force de frottement qui apparait.

16. Dispositif selon la revendication 15, caractérisé par le fait que l'axe de pivotement (32) est disposé en dessous du plan de transport (T) du film, parallèlement à ce plan et perpendiculairement à la direction de transport du film.

17. Dispositif selon la revendication 15 ou 16, caractérisé par le fait que le centre de gravité du dispositif de bridage arrière (30) se trouve, vu dans la direction de transport du film, en avant de l'axe de pivotement (32).

18. Dispositif selon l'une des revendications 15 ou 17, caractérisé par le fait que le dispositif de bridage arrière (30) est équipé d'une lame (35) qui, dans la position de repos, vient en direction du rouleau (5) de transport du film et forme un guidage supérieur du film.

19. Dispositif selon l'une des revendications 15 à 18, caractérisé par le fait que le dispositif de bridage arrière (30) comporte une enveloppe (34) sensiblement cylindrique, présentant une fente (A) d'introduction du film, parallèle à l'axe, sur le chemin de transport du film, ainsi qu'un rouleau (33) qui se trouve, librement porté, dans l'enveloppe (34) et dont le diamètre est un peu inférieur à celui de l'enveloppe, de sorte qu'il existe une fente d'introduction (S) entre le rouleau (33) et la paroi intérieure de l'enveloppe.

20. Dispositif selon les revendications 18 et 19, caractérisé par le fait que la lame (35) part à peu près tangentiellement depuis le bord supérieur de la fente (A) d'introduction du-film et que, du côté de l'introduction du film, est prévue, pour l'extrémité avant du film, après la zone de contact entre l'enveloppe (34) et le rouleau (33), une butée (36) qui dépasse à l'intérieur de l'enveloppe.

21. Dispositif selon la revendication 18, caractérisé par le fait que, sur la face inférieure de l'extrémité, située du côté de l'axe de pivotement, de la lame (35), est fixé un ressort (37) à l'ame(s) formant, avec la lame (35), une fente de bridage pour le film (F).

22. Dispositif selon l'une des revendications 18 à 21, caractérisé par le fait que le rouleau (5) de transport du film est réalisé partant en double cône vers l'intérieur et que l'extrémité, située du côté du rouleau de transport, de la lame (35) est adaptée à la forme du rouleau de transport du film.

Fig. 1

EP 0 320 454 B1

Fig. 2

Fig. 3

Fig. 4

**Fig. 5**

**Fig. 6**

Fig. 1

_Fig. 8_

_Fig. 9_

Fig. 10